# EUROPÄISCHE PATENTSCHRIFT

(11) **EP 3 173 587 B1**
(45) Veröffentlichungstag und Bekanntmachung des Hinweises auf die Patenterteilung: **31.03.2021**
(21) Anmeldenummer: 15196937.5
(22) Anmeldetag: 30.11.2015
(51) Int. Cl.: F01D 25/24, F04D 29/52, F04D 29/64

(54) **GEHÄUSE FÜR EINE STRÖMUNGSMASCHINE, EINBAUSICHERUNG UND STRÖMUNGSMASCHINE**
HOUSING FOR A FLUID FLOW ENGINE, SECURING DEVICE AND FLUID FLOW ENGINE
CARTER DE TURBOMACHINE, ELEMENT DE VERROUILLAGE ET TURBOMACHINE

(43) Veröffentlichungstag der Anmeldung: 31.05.2017
(73) Patentinhaber: MTU Aero Engines AG, 80995 München (DE)
(72) Erfinder: Mairhanser, Vitalis, 85244 Sigmertshausen (DE); Albers, Lothar, 80638 München (DE); Zotz, Georg, 85778 Haimhausen (DE)

(56) Entgegenhaltungen:
- EP-A1- 0 534 686
- WO-A1-2014/200830
- US-A- 4 076 451
- US-B1- 6 514 041

## Beschreibung

Die vorliegende Erfindung betrifft ein Gehäuse für eine Strömungsmaschine gemäß dem Oberbegriff des Anspruchs 1, eine Einbausicherung gemäß Anspruch 10, sowie eine Strömungsmaschine gemäß Anspruch 12.

In Strömungsmaschinen, insbesondere in Gasturbinen und in deren Verdichtem, werden oft Gehäusestrukturierungen mit Strömungsleitelementen eingesetzt. Eine derartige Gehäusestrukturierung mit Strömungsleitelementen wird im englischen als "Casing Treatment", abgekürzt CT, bezeichnet. Gehäusestrukturierungen haben die Aufgabe, einen aerodynamisch stabilen Betriebsbereich, insbesondere in Verdichtem, durch eine Optimierung eines Pumpengrenzabstands zu erhöhen. Ein optimierter Pumpengrenzabstand ermöglicht höhere Verdichterdrücke und somit eine höhere Verdichterbelastung. Die für einen örtlichen und letztendlich für das Pumpen des Verdichters verantwortlichen Störungen treten an gehäuseseitigen Enden der Laufschaufeln einer bzw. mehrerer Verdichterstufen bzw. an den nabenseitigen, radial innenliegenden Enden der Leitschaufeln auf, da in diesen Bereichen die aerodynamische Belastung im Verdichter am höchsten ist. Durch die Gehäusestrukturierungen wird die Strömung im Bereich der Schaufelenden stabilisiert.

In der EP 0 534 686 A1 wird eine Bürstendichtung zum Abdichten eines Rotors gegen einen Stator offenbart. Die Bürstendichtung ist in einer Stützstruktur des Stators mittels einer Presspassung fixiert.

In der US 6,514,014 B1 wird eine thermische Strömungsmaschine mit einem Trägersegment für LeitschaufeIn und mit einem Wärmeschutzsegment, welches mit der Leitschaufelträgerstruktur verbunden ist, offenbart.

In der US 4,076,451 A wird eine Leitschaufelanordnung aus einem keramischen Material offenbart. Die keramische Leitschaufelanordnung ist zwischen zwei Gehäusesegmenten mittels einer Presspassung angeordnet.

In der WO 2014/200830 A1 wird eine Gasturbine mit einer Durchflusskontrollvorrichtung offenbart. Die Durchflusskontrollvorrichtung ist im Gehäuse zur Verringerung von Leckageströmen mittels einer Presspassung fixiert.

Eine Aufgabe der vorliegenden Erfindung ist es, ein weiteres Gehäuse mit wenigstens einer Gehäusestrukturierung in einer Strömungsmaschine vorzuschlagen.

Die erfindungsgemäße Aufgabe wird durch ein Gehäuse mit den Merkmalen des Anspruchs 1 gelöst. Sie wird ferner durch eine Einbausicherung gemäß Anspruch 10 und eine Strömungsmaschine gemäß Anspruch 12 gelöst.

Erfindungsgemäß wird somit ein Gehäuse für eine Strömungsmaschine vorgeschlagen, das wenigstens einen ersten und einen zweiten Gehäuseabschnitt umfasst. Der erste Gehäuseabschnitt weist einen ersten Werkstoff auf und der zweite Gehäuseabschnitt weist einen zweiten Werkstoff auf. Der erste Werkstoff ist unterschiedlich zum zweiten Werkstoff. Der zweite Gehäuseabschnitt weist eine Gehäusestrukturierung mit Strömungsleitelementen zur Strömungsbeeinflussung der Hauptdurchströmung der Strömungsmaschine auf. Der zweite Gehäuseabschnitt ist mittels einer radialen Presspassung kraftschlüssig mit dem ersten Gehäuseabschnitt verbunden. Der erste Werkstoff weist einen ersten Wärmeausdehnungskoeffizienten und der zweite Werkstoff einen vom ersten Wärmeausdehnungskoeffizienten unterschiedlichen zweiten Wärmeausdehnungskoeffizienten auf.

Die erfindungsgemäße Einbausicherung umfasst ein erfindungsgemäßes Gehäuse, wobei der erste Gehäuseabschnitt eine axiale Begrenzung, insbesondere einen radial versetzten Absatz, zum Positionieren und zum, Begrenzen der axialen Verschiebbarkeit des zweiten Gehäuseabschnitts aufweist. Die axiale Begrenzung kann ebenso ein zusätzliches Bauteil sein, welches in den ersten Gehäuseabschnitt eingebracht, fixiert oder mit dem ersten Gehäuseabschnitt verbunden wird. Ein derartiges Bauteil kann beispielsweise ein Ring, insbesondere ein Sprengring, sein, der in eine Nut im ersten Gehäuseabschnitt montiert wird und eine axiale Begrenzung für den zweiten Abschnitt darstellt. Ebenso kann das zusätzliche Bauteil ein Zusatzring sein, der in den ersten Gehäuseabschnitt eingeschoben wird.

Eine derartige konstruktive axiale Begrenzung kann als "mistake proof feature" bezeichnet werden, mit dem eine eindeutige Lagezuordnung oder Positionszuordnung zwischen dem ersten und dem zweiten Gehäuseabschnitt erreicht werden kann. Aufgrund der konstruktiven Ausgestaltung des zweiten Gehäuseabschnitts würde bei einem falschen oder unzulässigen oder um 180 Grad um eine Radialachse gedrehten zweiten Gehäuseabschnitt das Gehäuse anschließend nicht montiert und zusammengesetzt werden können. Weitere Gehäuseabschnitte, beispielsweise ein axial nachfolgender Gehäuseabschnitt, der als über dem Umfang geteilter Gehäuseabschnitt (als sogenannter "split case") oder als Dichtsegment (als sogenanntes "outer air seal") ausgeführt sein kann, können einen Einbau des zweiten Gehäuseabschnitts bei einer falschen Lage oder Positionierung des zweiten Gehäuseabschnitt verhindern oder blockieren.

In manchen, erfindungsgemäßen Ausführungsformen weist der zweite Gehäuseabschnitt wenigstens einen radial versetzten Abschnitt auf, welcher sich über die axiale Begrenzung des ersten Gehäuseabschnitts hinaus erstreckt.

Die erfindungsgemäße Strömungsmaschine umfasst wenigstens ein erfindungsgemäßes Gehäuse. Die Strömungsmaschine kann ein Verdichter, insbesondere ein Hochdruckverdichter, sein. Ebenso kann die Strömungsmaschine ein Flugtriebwerk sein.

Vorteilhafte Weiterentwicklungen der vorliegenden Erfindung sind jeweils Gegenstand von Unteransprüchen und Ausführungsformen.

Erfindungsgemäße beispielhafte Ausführungsformen können eines oder mehrere der im Folgenden genannten Merkmale aufweisen.

Das erfindungsgemäße Gehäuse kann für eine Anwendung in einem Hochdruckverdichter, in einem Niederdruckverdichter, in einer Hochdruckturbine oder in einer Niederdruckturbine eines Flugtriebwerks ausgestaltet sein.

In einigen erfindungsgemäßen Ausführungsformen ist die Strömungsmaschine eine axiale Strömungsmaschine, insbesondere eine Gasturbine, insbesondere eine Fluggasturbine.

In bestimmten erfindungsgemäßen Ausführungsformen weisen der erste und/oder der zweite Gehäuseabschnitt keine Bauteile oder Verbindungselemente zum Verbinden des ersten mit dem zweiten Gehäuseabschnitt auf. Derartige Verbindungselemente können Schrauben, Stifte, Niete, Nuten, Haken oder ähnliche Elemente sein.

In gewissen erfindungsgemäßen Ausführungsformen ist ein Gehäuseabschnitt ein axialer und/oder ein radialer Abschnitt des Gehäuses. Ein Abschnitt kann als Segment bezeichnet werden. Ein in axiale Gehäuseabschnitte segmentiertes Gehäuse kann den Einbau einzelner Gehäusekomponenten in das Gehäuse vereinfachen oder ermöglichen. Beispielsweise können Strömungskanäle zur Kühlung in der axialen Teilungsebene vorgesehen werden oder es können über dem Umfang segmentierte Gehäuseteile in einer Teilungsebene axial geteilter Gehäuseabschnitte montiert und eingesetzt werden. Weiterhin kann die Fertigung, die Montage und der Transport des Gehäuses mit axial geteilten Gehäuseabschnitten vereinfacht werden.

Ein Werkstoff kann als Material bezeichnet werden. Werkstoffe können metallische Werkstoffe, Kunststoffe, Verbundmaterialien, keramische Werkstoffe oder andere Werkstoffe sein.

Der Begriff "Gehäusestrukturierung", wie er hierin verwendet wird, bezeichnet eine Strukturierung oder Ausgestaltung des Gehäuses oder eines Gehäuseabschnitts zur Strömungsbeeinflussung der Hauptdurchströmung durch die Strömungsmaschine. Gehäusestrukturierungen können als Zirkulationsstrukturen oder Rezirkulationsstrukturen bezeichnet werden. Gehäusestrukturierungen werden oft in Gasturbinen und insbesondere in Verdichtern, beispielsweise in Hochdruckverdichtern von Flugtriebwerken eingesetzt. Mithilfe von Gehäusestrukturierungen kann ein aerodynamisch stabiles Betriebsverhalten der Strömungsmaschine erreicht oder verbessert werden. Dies kann beispielsweise durch eine sogenannte Optimierung eines Pumpgrenzenabstandes erzielt werden. Der Pumpgrenzenabstand kann vereinfacht als der Abstand des Betriebspunktes der Strömungsmaschine von einem kritischen Betriebspunkt mit beispielsweise stark instationärem Verhalten mit erheblichen Druckstößen bezeichnet werden. In diesem kritischen Betriebspunkt können beispielsweise Strömungsablösungen an der radial äußeren Schaufelkante auftreten. Oft wird das maximale Stufendruckverhältnis in einer Verdichterstufe der Strömungsmaschine kurz vor dem kritischen Betriebspunkt erreicht. Der Pumpgrenzenabstand kann beispielsweise zwischen 5% und 25% betragen. Bei einem Pumpgrenzenabstand von 5% liegt der aktuelle Betriebspunkt nahe an dem kritischen Betriebspunkt, bei 25% entsprechend weiter entfernt. Mit Gehäusestrukturierungen, wie sie erfindungsgemäß vorgeschlagen werden, kann der kritische Betriebspunkt verbessert bzw. verschoben werden, so dass ein optimierter Pumpgrenzenabstand ermöglicht wird und höhere Verdichterdrücke und somit höhere Verdichterbelastungen zugelassen werden. Durch die Gehäusestrukturierungen mit Strömungsleitelementen kann die Strömung im Bereich der Schaufelenden stabilisiert werden.

Der Begriff "Passung", wie er hierin verwendet wird, bezeichnet eine maßliche Beziehung zwischen zwei gepaarten, toleranzbehafteten Teilen. Insbesondere weisen die beiden Teile ein gleiches Nennmaß auf. Die Lage und Größe der Toleranzfelder können unterschiedlich sein. Passungen oder Passsysteme können genormt sein, beispielsweise nach DIN- oder ISO-Normen. Ebenso können Passungen oder Passsysteme nicht genormt sein. Wenn die Passungen oder Passsysteme nicht genormt sind, können die Toleranzen oder Passungsangaben für Nennmaße von den Werten der ISO-Normen abweichen. Insbesondere weichen die Passungen oder Passsysteme bei der Verwendung von Nicht-ISO-Maßeinheiten, beispielsweise bei der Verwendung des Längenmaßes "Inch" anstatt "Meter" von den ISO-Normen ab.

Der Begriff "Presspassung", wie er hierin verwendet wird, bezeichnet eine kraftschlüssige Verbindung von zwei Bauteilen. Die Presspassung kann über unterschiedliche Durchmesser und/oder über eine geeignete Materialpaarung der beiden Bauteile ausgeführt werden. Insbesondere weist eine geeignete Materialpaarung unterschiedliche Materialien mit unterschiedlichen Wärmeausdehnungskoeffizienten α auf. Eine Presspassung mit unterschiedlichen Durchmessern kann Bauteile mit gleichen oder unterschiedlichen Nennmaßen aufweisen. Die Bauteile können zusätzlich oder alternativ zu den gleichen oder unterschiedlichen Nennmaßen gleiche oder unterschiedliche Übermaßpassungen aufweisen. Eine Presspassung verbindet zwei Bauteile kraftschlüssig miteinander, so dass die beiden Bauteile ohne Relativbewegungen zueinander in Kontakt stehen.

Exemplarische Beispiele für Werkstoffe des ersten und/oder des zweiten Gehäuseabschnitts werden im Folgenden aufgelistet (Wärmeausdehnungskoeffizient α [10⁻⁶ m/(m^{∗}K)]):
- Titanlegierung Ti-6Al-4V (abgekürzt Ti-6-4; 6 Gewichtsprozent (Gew.-%) Aluminium und 4 Gew.-% Vanadium)
   bei 20 Grad (20°) Celsius (C): α = 9 x 10⁻⁶ m/(m^{∗}K)
   zwischen 20° C und 200° C (20° - 200°): α = 9,5 x 10⁻⁶ m/(m^{∗}K)
- Titanlegierung Ti-6Al-2Sn-4Zr-2Mo (Ti-6-2-4-2; 6 Gew,-% Aluminium, 2 Gew.-% Zinn, 4 Gew.-% Zirkonium, 2 Gew.-% Molybdän)
   20°: α = 8,5 x 10⁻⁶ m/(m^{∗}K)
   20° = 200°: α = 9 x 10⁻⁶ m/(m^{∗}K)
- Nichtrostender Stahl, X5CrNiCuNb17-4-4, Werkstoff DIN/EN Nr. 1.4548, 17-4 PH⁰⁰
   20° - 100°: α = 10,9 x 10⁻⁶ m/(m^{∗}K)
   20° - 300°: α = 11,1 x 10⁻⁶ m/(m^{∗}K)
- Nichtrostender Stahl, X5CrNiCuNbl5-5, Werkstoff DIN/EN Nr. 1.4545 LW, 15-5 PH⁰⁰
   20° - 200°: α = 10,8 x 10⁻⁶ m/(m^{∗}K)
   20° - 200°: α = 11,3 x 10⁻⁶ m/(m^{∗}K)
- Nichtrostender Stahl, X12CrNiMoV12-3, Werkstoff DIN/EN Nr. 1.4939, Jethete M 152™
   20° - 200°: α = 11 x 10⁻⁶ m/(m^{∗}K)
   20° - 400°: α = 12 x 10⁻⁶ m/(m^{∗}K)
- Nichtrostender Stahl, Werkstoff AMS 5616 (US), ATI 418 SPL™ alloy (Greek Ascoloy)
   26,7° - 93°: α = 10,5 x 10⁻⁶ m/(m^{∗}K)
   26,7° - 204°: α = 11 x 10⁻⁶ m/(m^{∗}K)
   26,7° - 427°: α = 11,5 x 10⁻⁶ m/(m^{∗}K)
- Nichtrostender Stahl, Werkstoff UNS N19909, INCOLOY⁰⁰ 909 (UNS-Nummer: Abkürzung für "Unified Numbering System for Metals and Alloys")
   20° - 204°: α = 8 x 10⁻⁶ m/(m^{∗}K)
   20° - 425°: α = 7,7 x 10⁻⁶ m/(m^{∗}K)
- Nichtrostender Stahl, G-NiCr 12 Al 6 MoNb, Werkstoff DIN/EN 2.4671, IN 713C, UNS N 07713, AMS 5391
   21° - 93°: α = 5,9 x 10⁻⁶ m/(m^{∗}K)
   21° - 204°: α = 6,6 x 10⁻⁶ m/(m^{∗}K)
   21° - 425°: α = 7,3 x 10⁻⁶ m/(m^{*}K)

Grundsätzlich kann jeder Werkstoff für den ersten und zweiten Gehäuseabschnitt verwendet werden, sofern die Presspassung über den gesamten vorgesehenen Betriebsbereich aufrecht erhalten bleibt.

Der Wärmeausdehnungskoeffizient, abgekürzt als α, kann als thermischer Längenausdehnungskoeffizient bezeichnet werden. Der Wert und die Einheit des thermischen Längenausdehnungskoeffizienten α von beispielsweise 6 ^{∗}10⁻⁶ pro Kelvin kann als 6 ^{∗} 10⁻⁶ m/(m^{∗}K).

Der erste Wärmeausdehnungskoeffizient ist unterschiedlich zu dem zweiten Wärmeausdehnungskoeffizient. Der erste Gehäuseabschnitt mit dem ersten Werkstoff kann einen größeren oder einen kleineren Wärmeausdehnungskoeffizienten gegenüber dem zweiten Gehäuseabschnitt mit dem zweiten Werkstoff aufweisen. Beispielsweise kann ein zweiter Gehäuseabschnitt mit einem Werkstoff, der einen größeren Wärmeausdehnungskoeffizienten gegenüber dem ersten Gehäuseabschnitt aufweist, dazu führen, dass bei erhöhten Betriebstemperaturen sich der zweite Gehäuseabschnitt stärker ausdehnt als der erste Gehäuseabschnitt. Dies kann dazu führen, dass die kraftschlüssige Verbindung zwischen beiden Gehäuseabschnitten zu einem erhöhten Kraftschluss führt.

In bestimmten, erfindungsgemäßen Ausführungsformen ist der zweite Wärmeausdehnungskoeffizient kleiner als der erste Wärmeausdehnungskoeffizient.

In einigen, erfindungsgemäßen Ausführungsformen ist der erste Wärmeausdehnungskoeffizient kleiner oder gleich 10 x 10⁻⁶ pro Kelvin in einem Temperaturbereich zwischen wenigstens 20 Grad Celsius und 90 Grad Celsius.

In gewissen, erfindungsgemäßen Ausführungsformen ist der zweite Wärmeausdehnungskoeffizient größer als 10 x 10⁻⁶ pro Kelvin in einem Temperaturbereich zwischen wenigstens 20 Grad Celsius und 90 Grad Celsius.

In manchen, erfindungsgemäßen Ausführungsformen ist der erste Werkstoff eine Titanlegierung und/oder der zweite Werkstoff eine Titanlegierung oder ein Stahl. Beispielsweise können beide Werkstoffe gleiche oder unterschiedliche Titanlegierungen sein. Bei unterschiedlichen Titanlegierungen können die Wärmeausdehnungskoeffizienten gleich oder unterschiedlich sein.

In gewissen, erfindungsgemäßen Ausführungsformen sind die Strömungsleitelemente integral mit der Gehäusestrukturierung des ersten Gehäuseabschnitts verbunden. Beispielsweise können die Formen oder Strukturierungen der Gehäusestrukturierungen einschließlich der Strömungsleitelemente aus einem Halbzeugmaterial, beispielsweise einer Scheibe, spanend, beispielsweise fräsend, bearbeitet werden. Derartige Bearbeitungen können in CNC-Bearbeitungszentren durchgeführt werden. Alternativ können die Gehäusestrukturierungen einschließlich der Strömungsleitelemente mit einem generativen Verfahren hergestellt werden. Ein generatives Verfahren ist beispielsweise ein Lasersinter-Verfahren. Ein generatives Verfahren kann als Rapid Prototyping Verfahren bezeichnet werden. Ein weiteres mögliches Herstellungsverfahren für Strömungsleitelemente, die integral mit der Gehäusestrukturierung des ersten Gehäuseabschnitts verbunden sind, ist das Gußverfahren.

Der erste Gehäuseabschnitt kann eine unterschiedliche Anzahl an Strömungskanälen (als Gehäusestrukturierungen) und Strömungsleitelementen über dem Umfang aufweisen. Rein exemplarisch können 50, 70, 80, 100, 120 oder eine andere Anzahl von Strömungskanälen und/oder Strömungsleitelementen über dem Umfang angeordnet sein. Die Anordnung der Strömungskanäle und/oder der Strömungsleitelemente kann symmetrisch mit gleichen Abständen oder unsymmetrisch mit unterschiedlichen Abständen zueinander angeordnet sein.

In einigen, erfindungsgemäßen Ausführungsformen ist zweite Gehäuseabschnitt einteilig oder einstückig. Ein einstückiger zweite Gehäuseabschnitt ist aus einem Stück hergestellt. Sowohl ein einstückig aus einem Halbzeug spanend hergestellter zweiter Gehäuseabschnitt als auch ein generativ hergestellter zweiter Gehäuseabschnitt kann als einstückig hergestellt bezeichnet werden. Insbesondere werden keine Einzelteile oder einzelne Bauelemente wie beispielsweise Strömungsleitelemente mittels materialschlüssiger und/oder formschlüssiger Verbindungen mit dem zweiter Gehäuseabschnitt verbunden. Materialschlüssige Verfahren sind beispielsweise Schweißen oder Löten, formschlüssige Verbindungen sind beispielsweise Schrauben, Nieten, Haken oder ähnliches.

In bestimmten, erfindungsgemäßen Ausführungsformen ist der zweite Gehäuseabschnitt in Umfangsrichtung mehrteilig segmentiert. Der zweite Gehäuseabschnitt kann beispielsweise Segmente mit Umfangswinkeln von 180 Grad (zwei Segmente), 120 Grad (drei Segmente), 90 Grad (vier Segmente) oder 60 (sechs Segmente) Grad aufweisen. Die Segmente können gleichfalls andere Umfangswinkel aufweisen. Ebenso können die Umfangswinkel der Segmente unterschiedlich sein, beispielsweise zwei Segmente mit 120 Grad und zwei Segmente mit 60 Grad.

In einigen, erfindungsgemäßen Ausführungsformen ist der erste Gehäuseabschnitt ein axial geteilter Gehäuseabschnitt des Gehäuses der Strömungsmaschine. Ein axial geteilter erster Gehäuseabschnitt kann die Montage des zweiten Gehäuseabschnitts vorteilhaft vereinfachen, indem der zweite Gehäuseabschnitt in Axialrichtung in den ersten Gehäuseabschnitt eingeführt oder mit dem ersten Gehäuseabschnitt verbunden werden kann.

Manche oder alle erfindungsgemäßen Ausführungsformen können einen, mehrere oder alle der oben und/oder im Folgenden genannten Vorteile aufweisen.

Mittels des erfindungsgemäßen Gehäuses kann auf separate Bauteile oder Verbindungselemente zum Verbinden des ersten mit dem zweiten Gehäuseabschnitt vorteilhaft verzichtet werden. Dadurch kann eine konstruktiv und fertigungstechnisch einfache und kostengünstige Ausführung realisiert werden. Auf weitere Verbindungselemente wie beispielsweise Schrauben, Stifte, Niete oder ähnliche Elemente kann konstruktiv verzichtet werden. Aufgrund der erfindungsgemäßen Presspassung zwischen dem ersten und dem Gehäuseabschnitt kann vorteilhaft auf weitere oder alternative Verdrehsicherungen des zweiten Gehäuseabschnitts gegenüber dem ersten Gehäuseabschnitt verzichtet werden. Insbesondere ist kein Haken oder eine andere formschlüssige Verdrehsicherung an dem ersten Gehäuseabschnitt und/oder an dem zweiten Gehäuseabschnitt notwendig, um eine Relativbewegung, insbesondere im vorgesehenen betriebsbedingten Einsatz des Gehäuses, notwendig. Damit können vorteilhaft die Herstellungskosten reduziert werden. Ein Haken oder ein anderes Bauteil ist bei einer Presspassung nicht notwendig. Weiterhin kann vorteilhaft die Montage des zweiten Gehäuseabschnitts auf oder an dem ersten Gehäuseabschnitt vereinfacht ausgeführt werden, da beispielsweise keine exakte Umfangspositionierung für eine formschlüssige Verbindung als Verdrehsicherung notwendig ist.

Mittels der erfindungsgemäßen Einbausicherung des erfindungsgemäßen Gehäuses kann ein fehlerhafter Einbau durch eine falsche oder nicht vorgesehene Lage und Positionierung des zweiten Gehäuseabschnitts gegenüber dem ersten Gehäuseabschnitt vorteilhaft verhindert werden. Eine Einbausicherung kann mittels einer axialen Begrenzung in oder an dem ersten Gehäuseabschnitt, insbesondere mittels eines radial versetzten Absatzes, ausgeführt werden.

Die vorliegende Erfindung wird im Folgenden anhand der beigefügten Zeichnung exemplarisch erläutert.

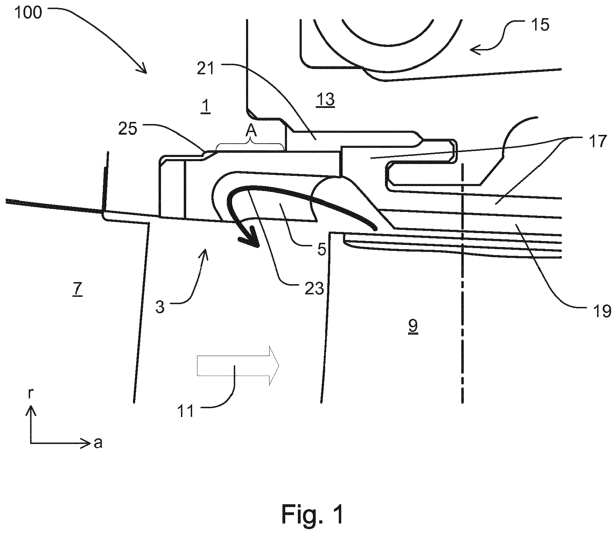

- **Fig. 1**: zeigt ein erfindungsgemäßes Gehäuse einer Strömungsmaschine mit einem ersten und einem zweiten Gehäuseabschnitt, wobei der zweite Gehäuseabschnitt ein Strömungsleitelement aufweist.

**Fig. 1** zeigt ein erfindungsgemäßes Gehäuse 100 einer Strömungsmaschine mit einem ersten Gehäuseabschnitt 1 und einem zweiten Gehäuseabschnitt 3, wobei der zweite Gehäuseabschnitt 3 ein Strömungsleitelement 5 aufweist. Weiterhin ist eine verstellbare Leitschaufel 7, eine Laufradschaufel 9 sowie ein Hauptdurchströmungskanal 11 dargestellt. Der erste Gehäuseabschnitt 1 kann als Zwischengehäuse (engl. "intermediate casing", abgekürzt IMC) oder Zwischengehäuseabschnitt bezeichnet werden. Die Leitschaufel 7 kann in dem Zwischengehäuse 1 drehbar (um eine Radialachse) gelagert sein.

An das Zwischengehäuse 1 schließt sich axial stromab ein weiterer Gehäuseabschnitt 13 an. Dieser weitere Gehäuseabschnitt 13 ist als in Umfangsrichtung geteilter Gehäuseabschnitt 13 ausgeführt. In Fig. 1 ist die Teilungsebene dargestellt, in der die Verschraubung 15 der geteilten Gehäuseabschnitte angedeutet ist. Ein in Umfangsrichtung geteiltes Gehäuse, oder Gehäuseabschnitt, kann als "split case" bezeichnet werden. Insbesondere ist der Gehäuseabschnitt 13 in zwei 180 Grad umfassende Gehäuseabschnitte 13 geteilt, beispielsweise ausgeführt in einem Hochdruckverdichter als Abschnitt in einer Strömungsmaschine. Die Umfangswinkel der über dem Umfang geteilten Gehäuseabschnitte 13 können anstatt 180 Grad alternativ 120 Grad, 90 Grad, 60 Grad, 45 Grad oder einen anderen Umfangswinkel aufweisen.

An den weiteren Gehäuseabschnitt 13 ist radial innen ein weiteres Gehäusebauteil montiert. Dieses weitere Gehäusebauteil wird in dieser Ausführungsform als Dichtsegment 17 bezeichnet. Das Dichtsegment 17 kann als "outer air seal" (abgekürzt als OAS) bezeichnet werden. An dem Dichtsegment 17 ist radial innen ein Dichtungselement befestigt (oder ist mit diesem integral verbunden), das im Folgenden als Anstreifbelag 19 bezeichnet wird. Mittels des Anstreifbelags 19 kann der Spalt zwischen dem radial äußeren Ende der Laufradschaufel 9 und dem Dichtsegment 17 minimiert werden. Zwischen dem zweiten Gehäuseabschnitt 3, dem weiteren Gehäuseabschnitt 13 und dem Dichtsegment 17 ist weiterhin ein Gehäuse-Zwischenraum 21 dargestellt, der beispielsweise als Luftspalt zur Kühlung von Gehäusebauteilen genutzt werden kann.

Mithilfe des zweiten Gehäuseabschnitts 3, dem Strömungsleitelement 5 und weiteren über dem Umfang angeordneten Strömungsleitelementen 5 werden lokale Strömungen 23 und/oder Zirkulationsgebiete oder Rezirkulationsgebiete initiiert. Diese lokalen Strömungen 23 können kritische Strömungsgebiete am äußeren Laufradschaufelende beeinflussen, indem beispielsweise Strömungsabrißzonen, Wirbelgebiete etc. stabilisiert werden und damit ein stabiles Strömungsverhalten in der Strömungsmaschine erzeugt wird. Dieses Verhalten kann als aerodynamisch stabiles Betriebsverhalten bezeichnet werden. Insbesondere bei Verdichtern als Strömungsmaschinen kann damit eine Optimierung des Pumpengrenzabstands erzielt werden. Über dem Umfang können zahlreiche Strömungsleitelemente 5 in dem zweiten Gehäuseabschnitt 3 angeordnet sein, insbesondere zwischen 80 und 120 Strömungsleitelementen 5. Der zweiten Gehäuseabschnitt 3 kann als "casing treatment", abgekürzt CT, oder als "casing treatment ring" bezeichnet werden.

Der zweite Gehäuseabschnitt 3 sollte zur Erzielung des genannten Effekts (Optimierung des Pumpengrenzabstands) und insgesamt für einen sicheren Betrieb der Strömungsmaschine sicher fixiert werden und, ohne einer Gefahr eines Verdrehens in Umfangsrichtung, also einer Relativbewegung zwischen dem ersten 1 und dem zweiten 3 Gehäuseabschnitt, fest mit dem zweiten Gehäuseabschnitt 1 verbunden sein. Erfindungsgemäß wird diese Verbindung durch eine radiale Presspassung im axialen Abschnitt A zwischen dem ersten 1 und dem zweiten 3 Gehäuseabschnitt ausgeführt. Die radiale Presspassung kann als eine kraftschlüssige Verbindung bezeichnet werden.

Der zweite Gehäuseabschnitt 3 wird erfindungsgemäß mittels einer radialen Presspassung innerhalb des axialen Abschnitts A mit dem ersten Gehäuseabschnitt 1 verbunden. Eine kraftschlüssige Presspassung kann im Wesentlichen mittels unterschiedlicher Durchmesser und/oder mittels unterschiedlicher Wärmeausdehnungskoeffizienten einerseits des Werkstoffs des ersten Gehäuseabschnitts 1 und andererseits des Werkstoffs des zweiten Gehäuseabschnitts 3 umgesetzt werden. Wenn die beiden Werkstoffe des ersten 1 und des zweiten 3 Gehäuseabschnitts gleich sind, z. B. aufgrund konstruktiver Randbedingungen, wird die Presspassung in der Regel mittels unterschiedlicher Durchmesser realisiert. Wenn die beiden Werkstoffe unterschiedlich sind, mit unterschiedlichen Wärmeausdehnungskoeffizienten, kann die Presspassung aufgrund der unterschiedlichen Wärmeausdehnungskoeffizienten realisiert werden. In letzterem Fall können zusätzlich unterschiedliche Durchmesser verwendet werden.

Mittels einer erfindungsgemäßen radialen Presspassung wird ein Verdrehen, also eine Relativbewegung des zweiten Gehäuseabschnitts 3 gegenüber dem ersten Gehäuseabschnitt 1 im vorgesehenen betriebsbedingten Einsatz (Betriebsfall) verhindert. Der Betriebsfall kann dabei alle vorgesehenen Einsatzbedingungen mit den entsprechenden Belastungssituationen und Betriebstemperaturen umfassen. Die Betriebstemperaturen können beispielsweise in einem Flugtriebwerk 200 Grad Celsius bis 300 Grad Celsius, oder mehr, betragen.

Rein exemplarisch kann der erste Gehäuseabschnitt 1 beispielsweise aus einer Titanlegierung mit einem ersten Wärmeausdehnungskoeffizienten α₁ zwischen 7,6 x 10⁻⁶ m/(m^{∗}K) und 10 x 10⁻⁶ m/(m^{∗}K) hergestellt sein oder eine solche Titanlegierung aufweisen, wobei diese Werte sich auf einen Temperaturbereich zwischen 20 Grad Celsius und 200 Grad Celsius beziehen. Eine derartige Titanlegierung ist beispielsweise der Werkstoff Ti-6A1-4V (Titanlegierung mit 6 Gewichtsprozent Aluminium und 4 Gewichtsprozent Vanadium).

Ebenfalls rein exemplarisch kann der zweite Gehäuseabschnitt 3 beispielsweise aus einer Stahllegierung mit einem ersten Wärmeausdehnungskoeffizienten α₂ zwischen 10 x 10⁻⁶ m/(m^{∗}K) und 16 x 10⁻⁶ m/(m^{∗}K) hergestellt sein oder eine solche Stahllegierung aufweisen, wobei diese Werte sich auf einen Temperaturbereich zwischen 20 Grad Celsius und 200 Grad Celsius beziehen.

Gleichfalls kann der erste Gehäuseabschnitt 1 eine andere Titanlegierung, also unterschiedlich zu der Titanlegierung Ti-6A1-4V, aufweisen oder aus dieser hergestellt sein. Die weitere Titanlegierung weist insbesondere einen von der Titanlegierung Ti-6A1-4V unterschiedlichen Wärmeausdehnungskoeffizienten auf.

Weiterhin kann der zweite Gehäuseabschnitt 3 die gleiche Titanlegierung, also ebenfalls die Titanlegierung Ti-6A1-4V, aufweisen oder aus dieser hergestellt sein. In diesem Fall ist eine Presspassung nur mit unterschiedlichen Durchmessern erzielbar, wenn eine ausreichende, das heißt für alle vorgesehenen Betriebszustände und Temperaturen, kraftschlüssige Verbindung gewährleistet werden soll.

Der Außendurchmesser des zweiten Gehäuseabschnitts 3 und der Innendurchmesser des ersten Gehäuseabschnitts 1 weisen insbesondere in dem axialen Bereich A den gleichen Nenndurchmesser auf (bei gleichen oder unterschiedlichen Materialien). Der Außendurchmesser des zweiten Gehäuseabschnitts 3 und der Innendurchmesser des ersten Gehäuseabschnitts 1 können sich durch unterschiedliche Passungsmaße unterscheiden. Insbesondere weisen beide Gehäuseabschnitte Übermaße auf.

Der zweite Gehäuseabschnitt 3 weist an seinem vorderen Endbereich, in Fig. 1 links oder stromaufseitig, einen kleineren Durchmesser gegenüber dem Durchmesser im Bereich der Presspassung (axialer Abschnitt A) auf. Entsprechend weist der erste Gehäuseabschnitt 1 an seinem vorderen Endbereich der Aussparung oder Bohrung für den zweiten Gehäuseabschnitt 3 ebenfalls einen kleineren Durchmesser gegenüber dem Durchmesser im Bereich der Presspassung (axialer Abschnitt A) auf. Zwischen den beiden Durchmessern des ersten Gehäuseabschnitts 1 ist ein Absatz 25 angeordnet. Der zweite Gehäuseabschnitt 3 kann nur bis zu diesem Absatz 25 des ersten Gehäuseabschnitts 1 in Axialrichtung aufgeschoben werden. Dabei wird ein über dem Umfang einteiliger zweiter Gehäuseabschnitt 3 angenommen. Der Absatz 25 begrenzt den axialen Verschiebeweg des zweiten Gehäuseabschnitts 3. Diese konstruktive Ausführung der beiden Gehäuseabschnitte 1, 3 ermöglicht einen Einbau des zweiten Gehäuseabschnitts 3 nur in der in Fig. 1 gezeigten Anordnung. Dies wird als Einbausicherung des zweiten Gehäuseabschnitts 3 in den ersten Gehäuseabschnitt 1 bezeichnet. Bei einer um 180 Grad gedrehten Anordnung (um die radiale Achse r senkrecht zur Axialachse a) des zweiten Gehäuseabschnitts 3 wäre ein Einbau nicht mehr möglich, denn der vordere Endbereich des zweiten Gehäuseabschnitts 3 mit dem kleineren Durchmesser würde dann aufgrund des Dichtsegments 17 nicht mehr eingebaut werden können bzw. dieses blockieren. Diese konstruktive Ausgestaltung erlaubt somit eine eindeutige Lagezuordnung oder Positionszuordnung des zweiten Gehäuseabschnitts 3 gegenüber dem ersten Gehäuseabschnitt 1. Diese konstruktive Ausgestaltung wird als sogenannte Einbausicherung oder als "mistake proof feature" bezeichnet.

### Bezugszeichenliste

- 100: Gehäuse
- a: axial; Axialrichtung
- r: Radial; Radialrichtung
- u: Umfangsrichtung
- A: axialer Abschnitt
- 1: erster Gehäuseabschnitt
- 3: zweiter Gehäuseabschnitt
- 5: Strömungsleitelement
- 7: Leitschaufel
- 9: Laufradschaufel
- 11: Hauptdurchströmungskanal
- 13: weiterer Gehäuseabschnitt
- 15: Verschraubung
- 17: Dichtsegment
- 19: Anstreifbelag
- 21: Gehäuse-Zwischenraum
- 23: lokale Strömung
- 25: Absatz

## Patentansprüche

1. Gehäuse (100) einer Strömungsmaschine, umfassend wenigstens einen ersten Gehäuseabschnitt (1), welcher einen ersten Werkstoff aufweist, und einen zweiten Gehäuseabschnitt (3), welcher einen, vom ersten Werkstoff unterschiedlichen, zweiten Werkstoff aufweist, wobei der zweite Gehäuseabschnitt (3) eine Rezirkulationsstruktur als Gehäusestrukturierung zur Strömungsbeeinflussung der Hauptdurchströmung durch die Strömungsmaschine mit Strömungsleitelementen (5) aufweist,
**dadurch gekennzeichnet, dass**
der zweite Gehäuseabschnitt (3) mittels einer radialen Presspassung kraftschlüssig mit dem ersten Gehäuseabschnitt (1) verbunden ist, wobei der erste Werkstoff einen ersten Wärmeausdehnungskoeffizienten (α₁) und der zweite Werkstoff einen vom ersten Wärmeausdehnungskoeffizienten (α₁) unterschiedlichen zweiten Wärmeausdehnungskoeffizienten (α₂) aufweist.

2. Gehäuse (100) nach Anspruch 1, wobei der zweite Wärmeausdehnungskoeffizient (α₂) größer als der erste Wärmeausdehnungskoeffizient (α₁) ist.

3. Gehäuse (100) nach Anspruch 1 oder 2, wobei der erste Wärmeausdehnungskoeffizient (α₁) kleiner oder gleich 10 x 10⁻⁶ pro Kelvin in einem Temperaturbereich zwischen wenigstens 20 Grad Celsius und 90 Grad Celsius ist.

4. Gehäuse (100) nach einem der vorangegangenen Ansprüche, wobei der zweite Wärmeausdehnungskoeffizient (α₂) größer als 10 x 10⁻⁶ pro Kelvin in einem Temperaturbereich zwischen wenigstens 20 Grad Celsius und 90 Grad Celsius ist.

5. Gehäuse (100) nach einem der vorangegangenen Ansprüche, wobei der erste Werkstoff eine Titanlegierung und/oder der zweite Werkstoff eine Titanlegierung oder ein Stahl ist.

6. Gehäuse (100) nach einem der vorangegangenen Ansprüche, wobei die Strömungsleitelemente (5) integral mit der Gehäusestrukturierung verbunden sind.

7. Gehäuse (100) nach einem der vorangegangenen Ansprüche, wobei der zweite Gehäuseabschnitt (3) einteilig oder einstückig ist.

8. Gehäuse (100) nach einem der Ansprüche 1 bis 6, wobei der zweite Gehäuseabschnitt (3) in Umfangsrichtung mehrteilig segmentiert ist.

9. Gehäuse (100) nach einem der vorangegangenen Ansprüche, wobei der erste Gehäuseabschnitt (1) ein axial geteilter Gehäuseabschnitt des Gehäuses der Strömungsmaschine ist.

10. Einbausicherung, umfassend ein Gehäuse (100) nach einem der vorangegangenen Ansprüche, wobei der erste Gehäuseabschnitt (1) eine axiale Begrenzung, insbesondere einen radialen Absatz (25), zum Positionieren des zweiten Gehäuseabschnitts (3) als Einbausicherung des zweiten Gehäuseabschnitts (3) gegenüber dem ersten Gehäuseabschnitt (I) aufweist.

11. Einbausicherung nach dem vorangegangenen Anspruch, wobei der zweite Gehäuseabschnitt (3) wenigstens einen radial versetzten Abschnitt aufweist, welcher sich über die axiale Begrenzung des ersten Gehäuseabschnitts (I) hinaus erstreckt.

12. Strömungsmaschine mit einem Gehäuse (100) nach einem der vorangegangenen Ansprüche.

13. Strömungsmaschine nach Anspruch 12, wobei die Strömungsmaschine ein Verdichter, insbesondere ein Hochdruckverdichter, ist.

14. Strömungsmaschine nach Anspruch 12 oder 13, wobei die Strömungsmaschine ein Flugtriebwerk ist.

## Claims

1. Casing (100) of a turbomachine, comprising at least a first casing portion (1), which comprises a first material, and a second casing portion (3), which comprises a second material that is different from the first material, the second casing portion (3) comprising a recirculation structure as casing structuring which is intended for controlling the main flow through the turbomachine and comprises flowguide elements (5), **characterized in that** the second casing portion (3) is force-fittingly connected to the first casing portion (1) by means of a radial press fit, the first material having a first coefficient of thermal expansion (α₁) and the second material having a second coefficient of thermal expansion (α₂) that is different from the first coefficient of thermal expansion (α₁).

2. Casing (100) according to claim 1, wherein the second coefficient of thermal expansion (α₂) is greater than the first coefficient of thermal expansion (α₁).

3. Casing (100) according to either claim 1 or claim 2, wherein the first coefficient of thermal expansion (α₁) is less than or equal to 10 x 10⁻⁶ per Kelvin in a temperature range between at least 20 degrees Celsius and 90 degrees Celsius.

4. Casing (100) according to any of the preceding claims, wherein the second coefficient of thermal expansion (α₂) is greater than 10 x 10⁻⁶ per Kelvin in a temperature range between at least 20 degrees Celsius and 90 degrees Celsius.

5. Casing (100) according to any of the preceding claims, wherein the first material is a titanium alloy and/or the second material is a titanium alloy or a steel.

6. Casing (100) according to any of the preceding claims, wherein the flow guide elements (5) are integrally connected to the casing structuring.

7. Casing (100) according to any of the preceding claims, wherein the second casing portion (3) is formed in one part or in one piece.

8. Casing (100) according to any of claims 1 to 6, wherein the second casing portion (3) is segmented into several parts in the circumferential direction.

9. Casing (100) according to any of the preceding claims, wherein the first casing portion (1) is an axially divided casing portion of the casing of the turbomachine.

10. Built-in securing means comprising a casing (100) according to any of the preceding claims, wherein the first casing portion (1) has an axial limiting means, in particular a radial projection (25), for positioning the second casing portion (3) with respect to the first casing portion (1), as a built-in securing means for the second casing portion (3).

11. Built-in securing means according to the preceding claim, wherein the second casing portion (3) has at least one radially offset portion which extends beyond the axi al limiting means of the first casing portion (1).

12. Turbomachine comprising a casing (100) according to any of the preceding claims.

13. Turbomachine according to claim 12, wherein the turbomachine is a compressor, in particular a high-pressure compressor.

14. Turbomachine according to either claim 12 or claim 13, wherein the turbomachine is an aircraft engine.

## Revendications

1. Carter (100) d'une turbomachine, comprenant au moins une première section de carter (1), laquelle présente un premier matériau, et une seconde section de carter(3), laquelle présente un second matériau différent du premier matériau, la seconde section de carter (3) présentant une structure de recirculation en tant que structure de carter pour influencer l'écoulement principal à travers la turbomachine à l'aide d'éléments de guidage d'écoulement (5),
**caractérisé en ce que**
la seconde section de carter (3) est reliée à la première section de carter (1) à force au moyen d'un ajustement serré radial, le premier matériau présentant un premier coefficient de dilatation thermique (α₁) et le second matériau présentant un second coefficient de dilatation thermique (α₂) différent du premier coefficient de dilatation thermique (α₁).

2. Carter (100) selon la revendication 1, dans lequel le second coefficient de dilatation thermique (α₂) est supérieurau premier coefficient de dilatation thermique (α₁).

3. Carter (100) selon la revendication 1 ou 2, dans lequel le premier coefficient de dilatation thermique (α₁) est inférieur ou égal à 10 x 10⁻⁶ par kelvin dans une plage de température comprise entre au moins 20 degrés Celsius et 90 degrés Celsius.

4. Carter (100) selon l'une des revendications précédentes, dans lequel le second coefficient de dilatation thermique (α₂) est supérieur à 10x10⁻⁶ par kelvin dans une plage de température comprise entre au moins 20 degrés Celsius et 90 degrés Celsius.

5. Carter (100) selon l'une des revendications précédentes, dans lequel le premier matériau est un alliage de titane et/ou le second matériau est un alliage de titane ou un acier.

6. Carter (100) selon l'une des revendications précédentes, dans lequel les éléments de guidage d'écoulement (5) sont reliés de façon solidaire à la structure de carter.

7. Carter (100) selon l'une des revendications précédentes, dans lequel la seconde section de carter (3) est en une seule partie ou en une seule pièce.

8. Carter (100) selon l'une des revendications 1 à 6, dans lequel la seconde section de carter (3) est segmentée en plusieurs parties dans la direction circonférentielle.

9. Carter (100) selon l'une des revendications précédentes, dans lequel la première section de carter (1) est une section du carterde la turbomachine qui est divisée axialement.

10. Système de verrouillage, comprenant un carter (100) selon l'une des revendications précédentes, la première section de carter (1) présentant une limitation axiale, en particulier un épaulement radial (25), servant à positionnera seconde section de carter (3), en tant que système de verrouillage de la seconde section de carter (3), par rapport à la première section de carter (1).

11. Système de verrouillage selon la revendication précédente, dans lequel la seconde section de carter (3) présente au moins une section décalée radialement, laquelle s'étend au-delà de la limitation axiale de la première section de carter (1).

12. Turbomachine comportant un carter (100) selon l'une des revendications précédentes.

13. Turbomachine selon la revendication 12, dans laquelle la turbomachine est un compresseur, en particulier un compresseur à haute pression.

14. Turbomachine de la revendication 12 ou 13, dans laquelle la turbomachine est un moteur d'avion.
